# EUROPÄISCHE PATENTANMELDUNG

(11) **EP 3 388 987 A1**
(43) Veröffentlichungstag der Anmeldung: **17.10.2018**
(21) Anmeldenummer: 17166232.3
(22) Anmeldetag: 12.04.2017
(51) Int. Cl.: G06Q 10/08

(54) **UNTERSTÜTZUNG DES EINLAGERNS UND AUFFINDENS VON OBJEKTEN IN EINER LAGEREINRICHTUNG**

(71) Anmelder: Deutsche Post AG, 53113 Bonn (DE)
(72) Erfinder: Beckmann, Dr. Clemens, 50677 Köln (DE); Kasper, Christian, 50321 Brühl (DE); Schneebeck, Holger, 50968 Köln (DE)
(74) Vertreter: Cohausz & Florack

(57) **Zusammenfassung**

Eine Vorrichtung (300) empfängt Daten von Sensoren (340), die in einer Lagereinrichtung derart angeordnet sind, dass sie zumindest Lagerplätze (321) der Lagereinrichtung und mindestens einen Weg in der Lagereinrichtung erfassen können. Sie leitet eine Identifizierung und eine Position mindestens eines Objekts in der Lagereinrichtung aus den empfangenen Daten her. Sie veranlasst eine Speicherung der Position des mindestens einen Objekts mit Zuordnung zu seiner Identifizierung, sofern für das mindestens eine Objekt noch keine Position gespeichert ist. Sofern für das mindestens eine Objekt bereits eine Position gespeichert ist, überprüft die Vorrichtung die für das mindestens eine Objekt gespeicherte Position anhand der hergeleiteten Position und veranlasst einer Speicherung der hergeleiteten Position im Fall einer Änderung. Bei Erhalt einer Anfrage zur Position eines Objekts in der Lagereinrichtung liest die Vorrichtung eine mit Zuordnung zu der Identifizierung des Objekts gespeicherte Position des Objekts aus und stellt eine Information zu der Position bereit.

## Beschreibung

### GEBIET DER ERFINDUNG

Die vorliegende Erfindung betrifft die Nutzung von Lagereinrichtungen, und insbesondere ein Verfahren, eine Vorrichtung und ein Computerprogramm für eine Unterstützung des Einlagerns und Auffindens von Objekten in einer Lagereinrichtung, sowie ein System in dem eine solche Unterstützung implementiert ist.

### HINTERGRUND DER ERFINDUNG

Lagereinrichtungen dienen der Lagerung von Objekten für eine Vielzahl von Einsatzgebieten.

So kann eine Lagereinrichtung beispielsweise in Postfilialen oder Paketshops dazu dienen, Packstücke zu lagern, bis sie von Adressaten abgeholt bzw. bis sie aufgrund einer nicht erfolgten Abholung an den Absender zurückgeschickt werden. In einem anderen Einsatzgebiet kann eine Lagereinrichtung der Lagerung unterschiedlicher Waren dienen, bis diese an Kunden versendet werden.

Eine Lagerung in einer Lagereinrichtung kann dabei auf verschiedene Weise erfolgen.

In einem Festplatzsystem ist jedem Objekt ein bestimmter Lagerplatz anhand eines vorgegebenen Kriteriums vorbestimmt. Bei Waren kann es beispielsweise die Art der Ware sein; bei Packstücken die Ankunftszeit oder ein durch einen Barcode gegebener Identifizierer. Bei einer chaotischen Lagerung kann jedes Objekt auf jedem beliebigen passenden Lagerplatz untergebracht werden. Mischformen sind möglich.

### ALLGEMEINE BESCHREIBUNG EINIGER BEISPIELHAFTER AUSFÜHRUNGSFORMEN DER ERFINDUNG

Eine der Aufgaben der Erfindung besteht darin, eine besonders effiziente Nutzung einer Lagereinrichtung zu ermöglichen.

Die Erfindung wird durch die beigefügten Ansprüche definiert.

Ein Ausführungsbeispiel eines erfindungsgemäßen Verfahrens umfasst ein Empfangen von Daten einer Mehrzahl von Sensoren, die in einer Lagereinrichtung derart angeordnet sind, dass sie zumindest Lagerplätze der Lagereinrichtung und mindestens einen Weg in der Lagereinrichtung erfassen können. Das Verfahren umfasst ferner ein Herleiten zumindest einer Identifizierung und einer Position mindestens eines Objekts in der Lagereinrichtung aus den empfangenen Daten. Das Verfahren umfasst ferner ein Veranlassen einer Speicherung der Position des mindestens einen Objekts mit Zuordnung zu seiner Identifizierung, sofern für das mindestens eine Objekt noch keine Position gespeichert ist. Das Verfahren umfasst ferner, sofern für das mindestens eine Objekt bereits eine Position gespeichert ist, ein Überprüfen der für das mindestens eine Objekt gespeicherten Position anhand der hergeleiteten Position und ein Veranlassen einer Speicherung der hergeleiteten Position im Fall einer Änderung. Das Verfahren umfasst ferner bei Erhalt einer Anfrage zur Position eines Objekts in der Lagereinrichtung, wobei die Anfrage Daten enthält, die ein Herleiten einer Identifizierung des Objekts ermöglichen, ein Auslesen einer mit Zuordnung zu der Identifizierung gespeicherten Position des Objekts und ein Bereitstellen einer Information zu der Position des Objekts. Das Verfahren kann von einer Vorrichtung oder von einer Gruppe von Vorrichtungen ausgeführt werden.

Ein Ausführungsbeispiel einer erfindungsgemäßen Vorrichtung umfasst Mittel zum Veranlassen der Vorrichtung oder eines Systems, eine beliebige Ausführungsform des erfindungsgemäßen Verfahrens auszuführen. Die Mittel können beispielhaft mindestens einen Speicher mit Programmanweisungen und mindestens einen Prozessor umfassen. Der mindestens eine Prozessor kann eingerichtet sein zum Ausführen von Programmanweisungen auf dem mindestens einen Speicher. Die Programmanweisungen können dazu eingerichtet sein, die Vorrichtung bzw. das System zu veranlassen, eine beliebige Ausführungsform des erfindungsgemäßen Verfahrens durchzuführen, wenn sie von dem mindestens einem Prozessor ausgeführt werden. Der Speicher kann ein flüchtiger oder nicht-flüchtiger Speicher sein. Der Speicher kann austauschbar oder fest in die Vorrichtung integriert sein. Die Vorrichtung kann beliebige weitere Komponenten umfassen. Es versteht sich, dass die Mittel alternativ zumindest teilweise auch schaltungstechnisch realisiert sein können. Die erfindungsgemäße Vorrichtung kann beispielsweise ein Computer sein. Ein solcher Computer kann beispielsweise als Server für eine bestimmte Lagereinrichtung oder als Server für eine Mehrzahl von Lagereinrichtungen fungieren. Die erfindungsgemäße Vorrichtung kann ebenso ein Modul für einen beliebigen Computer sein.

Ein Ausführungsbeispiel eines erfindungsgemäßen Systems umfasst eine beliebige Ausführungsform einer erfindungsgemäßen Vorrichtung und außerdem die Mehrzahl von Sensoren mindestens einer Lagereinrichtung, und/oder eine Beförderungseinrichtung zum Befördern von Objekten, und/oder mindestens einen Datenspeicher. Das System kann beliebige weitere Elemente umfassen.

Ein Ausführungsbeispiel eines erfindungsgemäßen Computerprogramms umfasst Programmanweisungen, die dazu eingerichtet sind, eine Vorrichtung oder ein System zu veranlassen, eine beliebige Ausführungsform des erfindungsgemäßen Verfahrens durchzuführen, wenn sie von mindestens einem Prozessor ausgeführt werden.

Das Computerprogramm kann in einem gegenständlichen computerlesbaren Medium gespeichert sein, etwa in einem flüchtigen oder nicht-flüchtigen Programmspeicher einer Vorrichtung oder auf einem Speicherchip oder Memorystick. Es kann aber auch über das Internet und/oder über drahtgebundene Leitungen übertragen werden.

Eine effiziente Nutzung einer Lagereinrichtung basiert auf einer durchgehend korrekten Einlagerung von Objekten - sei es durch Ablage an einem bestimmten, vorgesehenen Ort, sei es durch verlässliche Dokumentation einer jeweiligen Ablage an einem beliebigen Ort. Beide Ansätze bedeuten einen wesentlichen Aufwand für das Lagerpersonal. Bei beiden Ansätzen kann es außerdem zu Fehlern des Lagerpersonals kommen, was das Wiederauffinden von Objekten äußerst aufwändig machen kann.

Die Erfindung sieht daher für bestimmte beispielhafte Ausführungsformen vor, dass die Position von Objekten in einer Lagereinrichtung anhand von Daten einer Mehrzahl von Sensoren ermittelt und gespeichert wird und dass die gespeicherte Position bei Bedarf aktualisiert wird. Durch eine geeignete Anordnung und Ausrichtung der Mehrzahl von Sensoren können Objekte dabei beispielsweise auf sämtlichen Lagerplätzen der Lagereinrichtung und auf sämtlichen Zugangswegen zu den Lagerplätzen erfasst werden. Die gespeicherte Position eines Objekts ist dabei stets oder in der Regel als eine Position des Objekts auf einem Lagerplatz zu verstehen und/oder als eine Position des Objekts, das gemäß von Sensordaten im Anschluss an eine Bewegung innerhalb eines vorgegebenen Zeitraums keine Änderung erfahren hat. Wird die Position mit Zuordnung zu einer Identifizierung des Objekts gespeichert, lässt sich die Position eines bestimmten Objektes anhand der Identifizierung dann stets unmittelbar und zuverlässig abrufen.

Durch die sensorbasierte Erfassung der Objekte in der Lagereinrichtung lassen sich die Positionen von Objekten mit wenig Zeitaufwand und besonders fehlerfrei dokumentieren. Durch die Möglichkeit der Änderung von gespeicherten Positionsangaben wird auch das Nachhalten von Umlagerungen von Objekten in der Lagereinrichtung unterstützt. Die Erfindung ermöglicht es damit, das Einlagern und Auffinden von Objekten in einer Lagereinrichtung zu beschleunigen. Das Erfassen der Wege, auf denen die Objekte in der Lagereinrichtung befördert werden, kann zusätzliche Informationen zur Bestimmung einer zu speichernden Position eines Objekts liefern.

In einer beispielhaften Ausführungsform umfasst das Ermitteln einer Position des mindestens einen Objekts in der Lagereinrichtung aus den empfangenen Daten ein Verfolgen eines Wegs des mindestens einen Objekts in der Lagereinrichtung anhand von empfangenen Daten von mindestens einem der Mehrzahl von Sensoren, der mindestens einen Weg in der Lagereinrichtung erfasst. Eine Verfolgung kann dabei zeitgleich zu der Datenerfassung erfolgen (Tracking), oder zeitversetzt (Tracing). Sie kann beispielsweise grundsätzlich zumindest während einer initialen Einlagerung eines Objekts und/oder bei einer Umlagerung des Objekts erfolgen, oder nur wenn sich die Position eines Objekts über die Erfassung der Lagerplätze nicht oder nicht eindeutig ermitteln lässt.

Die Mehrzahl von Sensoren umfasst mindestens zwei, vorzugsweise aber mindestens drei Sensoren, die zum Erfassen von Lagerplätzen und mindestens einem Weg angeordnet sind. Die Anzahl von Sensoren wird beispielsweise, aber nicht notwendigerweise, so gewählt werden, dass ein abschattungsfreies Verfolgen eines Objekts in der Lagereinrichtung möglich ist.

Die Mehrzahl von Sensoren kann beliebig gewählt werden, sofern es die von ihnen gelieferten Daten ermöglichen, ein erfasstes Objekt zu identifizieren und seine Position zu bestimmen. Die Sensoren können beispielsweise bildgebende Sensoren von Kameras umfassen. In dem Fall umfassen die erfassten Daten Bilddaten. Die eingesetzten Kameras können dabei beliebig ausgewählt werden. Es kann sich zum Beispiel Infrarotkameras oder Grauwert- oder RGB-Farbkameras handeln. Andere Sensoren können ebenso eingesetzt werden, wie Sensoren zur optischen Abstandsmessung zwischen bildgebenden Sensoren und/oder zwischen einem Sensor und einem Objekt. Hier kommt beispielsweise ein Sensor einer TOF (time of flight) Kamera in Frage, der die Laufzeit von reflektierten Signalen erfasst. Ein solcher Sensor kann beispielsweise ein Infrarot-Sensor sein. Ein Infrarot-Sensor erlaubt es, ein im Erfassungsbereich platziertes Objekt mittels am Objekt reflektierter, impulsförmiger Infrarot-Signale zu vermessen.

Ein Identifizieren eines Objekts kann beispielsweise anhand eines erfassten Barcodes oder eines erfassten zweidimensionalen Codes erfolgen. Ein Identifizieren eines Objekts kann aber beispielsweise auch auf einer Kombination verschiedener mittels der Sensoren ermittelten Objekteigenschaften beruhen. Geeignete Objekteigenschaften können beispielsweise Dimensionen (ermittelt z.B. mittels Infrarot TOF Kamera), Farbe/Muster (ermittelt z.B. mittels RGB Kamera) und/oder in Bar- oder Matrixcodes enthaltene Informationen (ermittelt z.B. über RGB Kamera) umfassen. Ebenfalls ist auch eine Erfassung von elektronischen/digitalen Informationen aus z.B. einem RFID-Chip mittels Antenne möglich.

Die Position eines Objekts kann beispielsweise durch Triangulationen basierend auf den von jeweils zwei Kamerasensoren gleichzeitig erfassten Bilddaten ermittelt werden. Hierzu können auch 3D-Kameras genutzt werden, die mindestens zwei bildgebende Sensoren umfassen. Die Position kann zusätzlich oder alternativ auch über Abstandsmessungen mittels Infrarot-Sensoren bestimmt werden.

Es versteht sich, dass sämtliche oder mehrere der eingesetzten Sensoren optional in jeweils einem Gerät integriert sein können. So könnten mindestens ein Infrarotsensor und RGB Kamerasensoren sowie optional ein Mikrofon in einem einzigen Gerät kombiniert sein.

Die Sensoren können immer aktiv sein, so dass sie stets zur Aktivierung von Prozessen genutzt werden können und/oder damit ständig automatisch Veränderungen von Objektpositionen erfasst werden können. Alternativ können die Sensoren auch nur zu bestimmten Zeiten aktiv sein. Weiter alternativ oder zusätzlich können einige ausgewählte Sensoren der Mehrzahl von Sensoren immer aktiv sein, um weitere Prozesse bei Bedarf in Gang zu setzen.

Die Daten der Mehrzahl von Sensoren können regelmäßig oder - bzw. zusätzlich - auf einen bestimmten Anlass hin empfangen werden. Beispielsweise kann vorgesehen sein, dass Nutzer mittels einer Geste oder einer Spracheingabe bewirken können, dass Sensordaten übermittelt werden.

Die Erkennung von Gesten und/oder Spracheingaben ermöglichen eine intuitive Bedienung durch Mitarbeiter ohne hinderliche Bedienung und ohne Nutzung von physischen Eingabegeräten, wie z.B. Handschuhen und 3D-Brillen.

In einer beispielhaften Ausführungsform werden sämtliche Identifizierungen von Objekten in der Lagereinrichtung ermittelt, die aus Daten hergeleitet werden können, die von der Mehrzahl von Sensoren zu einem bestimmten Zeitpunkt erhaltenen wurden. Sind in der Lagereinrichtung laut der gespeicherten Daten Objekte vorhanden, zu denen in dieser Aktion keine Identifizierung bestimmt werden konnte, wird eine wahrscheinliche Position jedes dieser Objekte bestimmt. Somit können auch aktuell nicht sichtbare oder zumindest nicht identifizierbare Objekte, die sich in der Lagereinrichtung befinden sollten, berücksichtigt werden. In dem Datensatz zu solchen Objekten kann ein Hinweis gespeichert werden, dass eine dem Objekt zugeordnete Position nur eine angenommene Position ist.

In einer beispielhaften Ausführungsform bewirkt das Bereitstellen einer Information zu der Position des Objekts eine optische und/oder akustische Ausgabe. Diese Ausgabe kann beispielsweise einen Lagerplatz, der der Position des Objekts entspricht, benennen.

In einer beispielhaften Ausführungsform bewirkt das Bereitstellen einer Information zu der Position des Objekts, dass ein Lagerplatz, der der Position des Objekts entspricht, in der Lagereinrichtung optisch hervorgehoben wird. Das Hervorheben kann beispielsweise über LEDs an den einzelnen Lagerplätzen oder über mindestens eine auf einen jeweiligen Lagerplatz ausrichtbare Punktlichtquelle, wie etwa einen Laser oder einen LED-Strahler, erfolgen. Andere optische Hervorhebungen sind ebenso möglich. Den gespeicherten Positionen kann optional eine Angabe zur Gewissheit der Position zugeordnet sein, und ein Lagerplatz kann optional in Abhängigkeit von der Angabe zur Gewissheit der Position optisch unterschiedlich hervorgehoben werden. So kann einer Position, die auf zuletzt erhaltenen Daten der Sensoren beruht, beispielsweise eine höhere Gewissheit zugeordnet sein, als einer Position, die lediglich als wahrscheinliche Position bestimmt wurde. Die unterschiedlichen Arten der Hervorhebung können beispielsweise in farblichen Unterschieden oder in unterschiedlichen Mustern bestehen. Hiermit kann ein Nutzer beispielsweise einen Hinweis darauf erhalten, dass ein gewünschtes Objekt auf einem hervorgehobenen Lagerplatz möglicherweise durch ein anderes Objekt verdeckt wird.

In einer beispielhaften Ausführungsform erfasst zumindest ein Teil der Mehrzahl der Sensoren einen Registrierungsort. Aus empfangenen Daten der Sensoren, die den Registrierungsort erfassen, werden zumindest eine Identifizierung und Dimensionen eines Objekts hergeleitet. Aus gespeicherten Daten und den hergeleiteten Dimensionen des Objekts wird ein Lagerplatz mit ausreichender Kapazität zur Lagerung des erfassten Objekts ermittelt. Eine Information zu dem Lagerplatz mit ausreichender Kapazität wird ausgegeben. Es kann vorgesehen sein, dass sämtliche Objekte, die der Lagereinrichtung neu zugeführt werden, zunächst den Registrierungsort passieren müssen. Sobald für diesen Ort eine Identifizierung eines Objekts hergeleitet ist, ist das Objekt als im Lager befindlich registriert. Die Identifizierung kann auf einem Barcode basieren; andere Identifizierungen, wie beispielsweise ein zweidimensionaler Code, eine Adresse oder eine aufgedruckte Ziffernfolge, sind aber ebenso möglich. Andere Objekteigenschaften, wie Dimensionen und Farbe, können die Identifizierung ergänzen. Vorzugsweise, aber nicht notwendigerweise, umfasst der Teil der Mehrzahl der Sensoren, die einen Registrierungsort erfassen, mindestens zwei entsprechend angeordnete bildgebende Sensoren. Die gleichzeitig aufgenommenen Daten von mindestens zwei derartigen Sensoren können beispielsweise gemeinsam ausgewertet werden, um die Dimensionen eines Objekts zu ermitteln. Die Dimensionen des Objekts können beispielsweise mittels Laufzeitverfahren oder mittels Kantenerkennung in den Bilddaten mehrerer bildgebender Sensoren und darauf basierenden Triangulationen ermittelt werden.

In einer beispielhaften Ausführungsform bewirkt das Bereitstellen einer Information zu dem Lagerplatz mit ausreichender Kapazität, dass der Lagerplatz in der Lagereinrichtung optisch hervorgehoben wird. Das optische Hervorheben kann wiederum beispielsweise mittels LEDs oder Laser erfolgen.

Eine weitere beispielhafte Ausführungsform sieht Maßnahmen für den Fall vor, dass festgestellt wird, dass kein Lagerplatz mit ausreichender Kapazität zur Lagerung des erfassten Objekts zur Verfügung steht. In dem Fall wird eine Möglichkeit einer Umlagerung von Objekten anhand von gespeicherten Daten ermittelt, um einen Lagerplatz mit ausreichender Kapazität zur Lagerung des erfassten Objekts zu schaffen. Es folgt eine Ausgabe einer Information bezüglich einer möglichen Umlagerung. Auch in diesem Fall kann beispielsweise ein optisches Hervorheben betroffener Lagerplätze mittels LEDs oder Lasern erfolgen.

In einer beispielhaften Ausführungsform erfolgt vor dem ersten Herleiten einer Position eines Objekts in der Lagereinrichtung eine Kalibrierung der Mehrzahl von Sensoren und/oder eine Erstellung eines Referenzbildes anhand von erhaltenen Daten der Mehrzahl von Sensoren während sich kein Objekt in der Lagereinrichtung befindet. Mit einer Kalibrierung der Sensoren kann beispielsweise sichergestellt werden, dass die Sensoren mit aufeinander abgestimmten Parametern, wie Weißabgleich oder Belichtungszeit usw., arbeiten, was beispielsweise später das Auffinden gleicher Punkte in verschiedenen Bildern erleichtert. Die Kalibrierung kann für einen Sensor für sich genommen erfolgen und/oder es kann eine Kalibrierung der Sensoren untereinander erfolgen. Damit kann dann die Bestimmung von Objektpositionen und von Objektdimensionen erleichtert werden. Das Erfassen der leeren Lagereinrichtung, z.B. in Form eines Referenzbildes für ein leeres Regal, kann das Herleiten von Positionen von Objekten erheblich erleichtern, da hiermit mögliche Positionen fest vorgegeben werden können. Außerdem kann mittels eines solchen Referenzbildes die Größe der einzelnen Lagerplätze ermittelt und gespeichert werden.

In einer beispielhaften Ausführungsform ist die Lagereinrichtung eine automatisierte Lagereinrichtung, in der mindestens eine Beförderungseinrichtung dazu eingerichtet ist, Objekte auf Lagerplätzen abzulegen und Objekte von Lagerplätzen abzuholen.

In einer beispielhaften Ausführungsform wird die Lagereinrichtung zumindest teilweise von Bedienpersonal zum Ablegen von Objekten auf Lagerplätzen und zum Abholen von Objekten von Lagerplätzen genutzt.

In einer beispielhaften Ausführungsform wird die Güte der gespeicherten Daten wiederholt anhand jeweils neu erhaltener Daten der Mehrzahl der Sensoren geprüft. Wenn Diskrepanzen zwischen den gespeicherten Daten und den neu erhaltenen Daten festgestellt werden, kann eine Meldung erfolgen.

In einer beispielhaften Ausführungsform wird außerdem eine mit Zuordnung zu der Identifizierung des mindestens einen Objekts gespeicherte Zeitangabe überwacht, und eine Benachrichtigung veranlasst, wenn die gespeicherte Zeitangabe anzeigt, dass eine vorgegebene Aktion fällig ist. Die Speicherung der Zeitangabe kann beispielsweise zusammen mit der Veranlassung einer Speicherung einer ersten Position des mindestens einen Objekts in der Lagereinrichtung veranlasst werden. Die Benachrichtigung kann beispielsweise veranlasst werden, wenn eine vorgegebene Zeitdauer seit der Speicherung der ersten Position des mindestens einen Objekts in der Lagereinrichtung überschritten wird und das Objekt die Lagereinrichtung noch nicht wieder verlassen hat. Die Zeitangabe kann dabei beispielsweise das Datum der Einlagerung des Objekts in der Lagereinrichtung oder das Ende einer vorgegebenen Zeitdauer als Fälligkeitsdatum umfassen. Die vorgegebene Zeitdauer kann beliebig sein, beispielsweise 7 Tage oder 14 Tage. Die Benachrichtigung kann beispielsweise eine Nachricht in Textform an einen Mitarbeiter der Lagereinrichtung umfassen, der damit aufgefordert wird, das Objekt auszuschleusen. Im Falle eines Paketes kann dies beispielsweise eine Rücksendung an den Absender bedeuten. Die Benachrichtigung kann separat für jedes Objekt erfolgen, oder beispielsweise einmal täglich als Liste mit allen an dem Tag betroffenen Objekten. Die Benachrichtigung kann eine Angabe der Position des Objekts umfassen. Zusätzlich kann optional eine optische Hervorhebung der Lagerplätze mit betroffenen Objekten erfolgen. Alternativ zu einem Ausschleusen des Objekts kann die veranlasste Benachrichtigung auch zu beliebigen anderen vorgegebenen Aktionen auffordern. So könnte nach einer bestimmten Zeitdauer der Einlagerung ein vorgesehener Empfänger des Objekts daran erinnert werden, das Objekt abzuholen.

In einer beispielhaften Ausführungsform werden mittels "Deep Learning" Daten aus mehreren vernetzten Lagereinrichtungen mittels Algorithmen ausgewertet und beispielsweise durch Musteranalyse gewonnene Informationen den einzelnen Systemen in den Lagereinrichtungen zur Verbesserung der Güte der Objektpositionen zur Verfügung gestellt.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### KURZE BESCHREIBUNG DER ZEICHNUNGEN

In den Figuren zeigt:
- Fig. 1: eine schematische Darstellung einer beispielhaften Ausführungsform einer erfindungsgemäßen Vorrichtung;
- Fig. 2: ein Ablaufdiagramm mit Verfahrensschritten einer beispielhaften Ausführungsform des erfindungsgemäßen Verfahrens;
- Fig. 3: eine schematische Darstellung einer beispielhaften Ausführungsform eines erfindungsgemäßen Systems;
- Fig. 4: ein Ablaufdiagramm mit ersten Verfahrensschritten einer beispielhaften Ausführungsform des erfindungsgemäßen Verfahrens ausgeführt in dem System aus Figur 3;
- Fig. 5: ein Ablaufdiagramm mit zweiten Verfahrensschritten einer beispielhaften Ausführungsform des erfindungsgemäßen Verfahrens ausgeführt in dem System aus Figur 3; und
- Fig. 6: ein Ablaufdiagramm mit dritten Verfahrensschritten einer beispielhaften Ausführungsform des erfindungsgemäßen Verfahrens ausgeführt in dem System aus Figur 3.

### DETAILLIERTE BESCHREIBUNG EINIGER BEISPIELHAFTERAUSFÜHRUNGSFORMEN DER ERFINDUNG

Die vorliegende Erfindung wird im Folgenden anhand von beispielhaften Ausführungsformen beschrieben, die ein effizientes Einlagern und Auffinden von Objekten in einer Lagereinrichtung unterstützen.

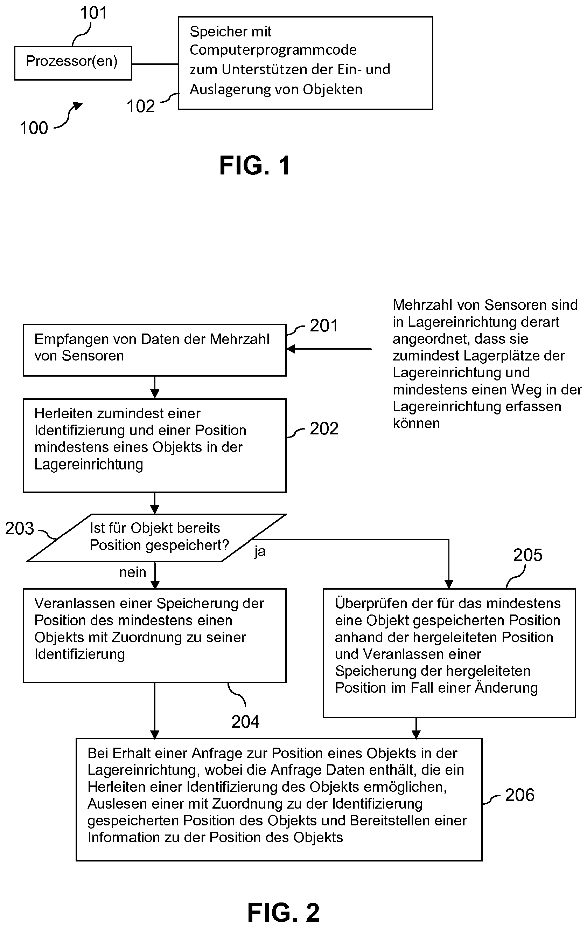

Figur 1 ist eine schematische Darstellung einer beispielhaften Ausführungsform einer erfindungsgemäßen Vorrichtung 100. Die Vorrichtung 100 kann beispielsweise ein Computer oder ein Modul für einen Computer, wie eine Steckkarte, sein. Die Vorrichtung 100 kann sich in der Lagereinrichtung befinden oder außerhalb der Lagereinrichtung. Die Vorrichtung 100 kann für eine bestimmte Lagereinrichtung vorgesehen sein, oder für eine beliebige Anzahl von Lagereinrichtungen.

Die Vorrichtung 100 umfasst mindestens einen Prozessor 101 und mindestens einen Speicher 102. Der Speicher 102 speichert ein Computerprogramm mit Programmanweisungen. Der Speicher 102 ist eine beispielhafte Ausführungsform eines erfindungsgemäßen computerlesbaren Mediums und das Computerprogramm ist eine beispielhafte Ausführungsform eines erfindungsgemäßen Computerprogramms. Der Prozessor 101 ist dazu eingerichtet, Programmanweisungen aus dem Programmspeicher 102 auszulesen und auszuführen und damit bestimmte Aktionen zu veranlassen.

Figur 2 ist ein Ablaufdiagramm, das ein erstes Ausführungsbeispiel eines erfindungsgemäßen Verfahrens illustriert. Die Verfahrensschritte werden von der Vorrichtung 100 durchgeführt, wenn der Prozessor 101 entsprechende Programmanweisungen aus dem Programmspeicher 102 ausliest und ausführt.

Die Lagereinrichtung umfasst eine Vielzahl von Lagerplätzen auf denen Objekte beispielsweise chaotisch, d.h. ohne vorbestimmte Zuordnung, gelagert werden können. In der Lagereinrichtung ist eine Mehrzahl von Sensoren angeordnet, die zumindest Lagerplätze der Lagereinrichtung sowie mindestens einen Weg in der Lagereinrichtung erfassen können. Vorzugsweise aber nicht notwendigerweise sind die Sensoren so angeordnet, dass alle Lagerplätze und alle Zugangswege zu den Lagerplätzen abschattungsfrei erfasst werden können. Neben den Lagerplätzen können die Sensoren optional auch bestimmte weitere Arbeitsbereiche der Lagereinrichtung erfassen. Die Sensoren können beispielsweise Sensoren von TOF- und/oder RGB-Kameras umfassen. Die Sensoren nehmen ständig (also filmartig) oder in regelmäßigen Abständen Daten auf und stellen diese zur Verfügung.

Die Vorrichtung 100 empfängt Daten der Mehrzahl von Sensoren. (Aktion 201)

Die Vorrichtung 100 leitet aus den empfangenen Daten individuelle Objektdaten her. Diese umfassen zumindest eine Identifizierung und eine Position mindestens eines Objekts in der Lagereinrichtung. (Aktion 202) Die Vorrichtung 100 kann hierbei jeweils eine Position für sämtliche erfasste Objekte herleiten, oder aber nur für ausgewählte Objekte; oder aber zu bestimmten Zeiten nur für ausgewählte Objekte und zu bestimmten Zeiten für alle Objekte. Ausgewählte Objekte können dabei beispielsweise Objekte sein, die neu in die Lagereinrichtung gekommen sind. Eine Position kann beispielsweise in Form von Koordinaten eines globalen oder lokalen Koordinatensystems hergeleitet werden, oder aber beispielsweise in Form einer Referenz auf einen bestimmten Lagerplatz.

Die Vorrichtung 100 kann nun anhand der Identifizierung prüfen, ob für das mindestens eine Objekt bereits eine Position gespeichert ist. (Aktion 203)

Ist dies nicht der Fall, so veranlasst die Vorrichtung 100 eine Speicherung der Position des mindestens einen Objekts mit Zuordnung zu seiner Identifizierung. (Aktion 204) Die Identifizierung kann dabei bereits gespeichert sein, so dass nur die Position neu gespeichert werden braucht. Dies kann beispielsweise der Fall sein, wenn in einer Ausführungsform vorgesehen ist, dass vor der Ablage eines Objekts auf einem Lagerplatz stets eine Registrierung mit der Identifizierung an einem Registrierungsort erfolgt. Ergibt sich in einer solchen Ausführungsform, dass eine noch nicht gespeicherte Identifizierung eines Objekts hergeleitet wurde, so kann eine entsprechende Meldung veranlasst werden. In anderen Ausführungsformen kann dagegen vorgesehen sein, dass Objekte erstmals erfasst werden, nachdem sie auf einen beliebigen passenden Lagerplatz verbracht wurden. In dem Fall werden Identifizierung und Position zusammen erstmals gespeichert.

Stellt die Vorrichtung 100 in Aktion 203 dagegen fest, dass für das mindestens eine Objekt bereits eine Position gespeichert ist, so überprüft sie die für das mindestens eine Objekt gespeicherte Position anhand der hergeleiteten Position und veranlasst einer Speicherung der hergeleiteten Position im Fall einer Änderung. (Aktion 205) Ein solcher Fall kann beispielsweise auftreten, wenn ein Objekt nach einer Unterbringung auf einem ersten Lagerplatz umgelagert wurde, um Platz für ein neues Objekt zu schaffen.

Es versteht sich, dass, wenn in Aktion 202 individuelle Daten für mehr als ein Objekt hergeleitet werden, Aktionen 203-205 separat für jedes Objekt erfolgen können.

Die Daten können in Speicher 102, in einem anderen Speicher der Vorrichtung 100 oder extern gespeichert werden. Eine externe Speicherung kann an einem Ort oder verteilt auf mehrere Orte erfolgen.

Die Aktionen 201 bis 205 können regelmäßig und/oder bei Bedarf beliebig wiederholt werden, so dass der Datenbestand stets aktuell gehalten wird.

Sofern die Vorrichtung 100 in Aktion 202 jeweils eine Position für sämtliche erfasste Objekte herleitet, kann sie optional auch eine Löschung gespeicherter Objektdaten veranlassen, wenn kein Objekt mit entsprechender Identifizierung mehr erfasst wurde und keine anderweitige Registrierung entfernter Objekte vorgesehen ist.

Erhält die Vorrichtung 100 nun eine Anfrage zur Position eines Objekts in der Lagereinrichtung, wobei die Anfrage Daten enthält, die ein Herleiten einer Identifizierung des Objekts ermöglichen, so liest die Vorrichtung eine mit Zuordnung zu der Identifizierung gespeicherten Position des Objekts aus und stellt eine Information zu der Position des Objektes bereit. (Aktion 206) Das Bereitstellen der Information kann zu einer optischen und/oder akustischen Ausgabe in der Lagereinrichtung führen. Die Anfrage kann auf verschiedene Weisen erfolgen. Sie kann sich beispielsweise aus einer Eingabe einer Identifizierung über eine Tastatur oder als Spracheingabe ergeben. Sie kann sich aber auch daraus ergeben, dass ein Abholzettel oder ähnliches, aus dem sich eine Identifizierung des Objekts ergibt, mit oder ohne separaten Aktvierungsbefehl zum Erfassen bereitgehalten wird.

Es versteht sich, dass in einer Variation statt der Vorrichtung 100 auch eine die Vorrichtung 100 enthaltende Vorrichtung oder ein die Vorrichtung 100 enthaltendes System veranlasst werden kann, die Verfahrensschritte aus Figur 2 durchzuführen.

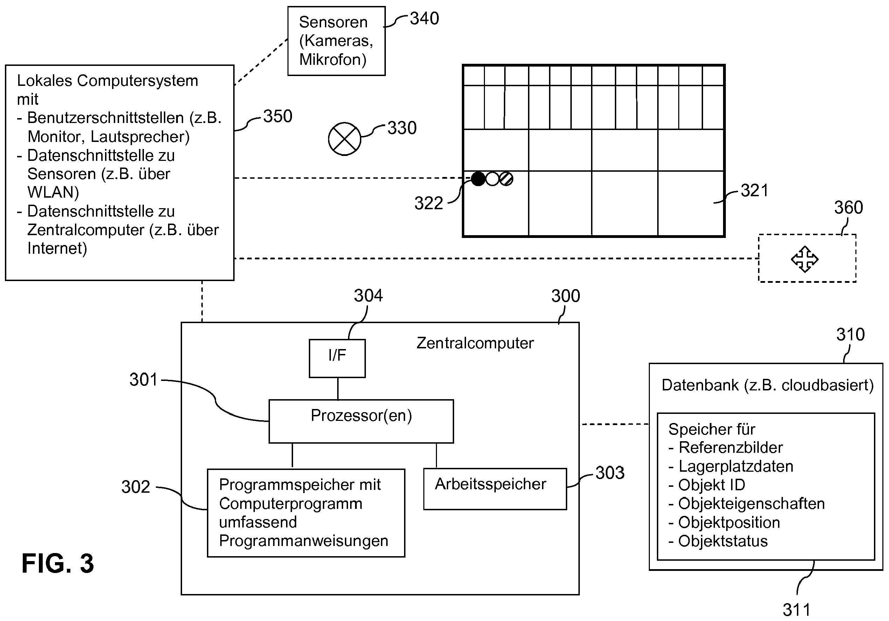

Figur 3 ist eine schematische Darstellung einer beispielhaften Ausführungsform eines erfindungsgemäßen Systems.

Das System umfasst eine Lagereinrichtung, einen Zentralcomputer 300 und eine Datenbank 310.

Die Lagereinrichtung umfasst eine größere Anzahl von Lagerplätzen 321 zum Lagern von Objekten, einen Registrierungsort 330, eine Mehrzahl von Sensoren 340, ein lokales Computersystem 350 und optional eine automatische Beförderungseinrichtung 360. Die Lagereinrichtung kann beispielsweise ein Paketshop oder eine Postfiliale sein, in der eine Vielzahl von Paketen als beispielhafte Objekte gelagert wird. Es kann sich aber auch um eine beliebige andere Lagereinrichtung zum Lagern beliebiger anderer Objekte handeln, wie eine Lagereinrichtung an beliebiger Stelle in einer Lieferkette.

Der Zentralcomputer 300 ist eine beispielhafte Ausführungsform einer erfindungsgemäßen Vorrichtung. Der Zentralcomputer 300 umfasst einen Prozessor 301, einen Programmspeicher 302, einen Arbeitsspeicher 303, und mindestens eine Kommunikationsschnittstelle (I/F) 304. Der Prozessor 301 ist mit jeder dieser Komponenten 302-306 verbunden.

Der Programmspeicher 302 ist ein nicht-flüchtiger Speicher, der Computerprogramme mit Programmanweisungen speichert. Er kann zusätzlich Parameter und andere Daten speichern. Der Prozessor 301 ist dazu eingerichtet, Programmanweisungen aus dem Programmspeicher 302 auszulesen und auszuführen. Der Arbeitsspeicher 303 kann ein flüchtiger Speicher sein, der vom Prozessor 301 zum Zwischenspeichern von Programmanweisungen und Daten genutzt werden kann.

Die Kommunikationsschnittstelle (I/F) 304 ermöglicht eine Kommunikation mit der Datenbank 310 und mit dem lokalen Computersystem 350 mindestens einer Lagereinrichtung. Es kann sich beispielsweise um eine Schnittstelle zum Internet handeln.

Die Datenbank 310 kann beispielsweise eine cloudbasierte Datenbank sein. Sie ist dazu eingerichtet, mit dem Zentralcomputer 300 über das Internet zu kommunizieren. Sie ist ferner dazu eingerichtet, Daten in mindestens einem Speicher 311 zu speichern. Die Daten können Referenzbilder für verschiedene Lagereinrichtungen, Daten zu den Lagerplätzen jedes Lagers, sowie Objektidentifizierungen (IDs) und diesen zugeordnet jeweilige Objekteigenschaften, eine jeweilige Objektposition und einen jeweiligen Objektstatus umfassen. Gegebenenfalls kann dabei vorgesehen werden, dass Personen auf den Referenzbildern maskiert werden. Die Daten können beliebige weitere Daten umfassen.

Die Lagerplätze 321 der Lagereinrichtung können beispielsweise unterschiedlich große Regalfächer eines oder mehrerer Regale sein. Jedem Lagerplatz 321 kann mindestens eine LED 322 zugeordnet sein. Sind mehrere LEDs 322 pro Lagerplatz 321 vorgesehen, so können sie verschiedene Farben aufweisen oder verschiedene Muster erzeugen, um verschiedene Information anzuzeigen. Eine nicht separat dargestellte Ansteuerungsschaltung weist eine Schnittstelle auf, mit der die LEDs 322 durch das lokale Computersystem 350 einzeln ansteuerbar sind. Die Schnittstelle kann drahtgebunden verbunden sein oder per Funk verbindbar sein. In letzterem Fall kann sie beispielsweise eine Schnittstelle für ein drahtloses lokales Netz (WLAN) sein. Es kann eine einzige Ansteuerungsschaltung für alle LEDs 322, eine separate Ansteuerungsschaltung jeweils für eine Gruppe von LEDs oder eine separate Ansteuerungsschaltung für jede LED vorgesehen sein.

Der Registrierungsort 330 kann ein Ort sein, den jedes Objekt, das der Lagereinrichtung zugeführt werden soll oder das die Lagereinrichtung verlässt, passieren muss.

Die Sensoren 340 sind auf eine Mehrzahl von Kameras verteilt. Es könnten beispielsweise mindestens zwei Sensoren zum Erfassen der Laufzeit von reflektierten Infrarot-Impulsen und mindestens zwei bildgebende Sensoren vorgesehen sein. Die Kameras können TOF-Kameras, Infrarotkameras und/oder RGB-Kameras umfassen, und/oder beliebige andere bilddatenerfassende Vorrichtungen. Eine Vorrichtung kann optional auch unterschiedliche Typen von Kameras oder unterschiedliche Typen von Sensoren 340 umfassen. Die Kameras sind so angeordnet, dass sie gemeinsam zumindest sämtliche Lagerplätze 321, die Laufwege zu den Lagerplätzen 321 sowie den Registrierungsort 330 abschattungsfrei erfassen können. In einer Ausführungsform können zumindest am Registrierungsort 330 Daten für ein 3D-Bild erfasst werden, und ansonsten Daten für zumindest ein 2D-Bild. Alternativ können aber auch für sämtliche Lagerplätze 321 oder für die gesamten Lagereinrichtung Daten für 3D-Bilder erfasst werden. Zum Erhalten von Daten für 3D-Bilder kann optional eine jeweilige 3D-Kamera genutzt werden, oder mehrere Kameras können so angeordnet werden, dass sich aus den von ihnen erfassten Daten ein 3D-Bild erzeugen lässt. Optional können die Sensoren 340 auch mindestens ein Mikrofon umfassen. Ein Mikrofon kann beispielsweise zumindest in der Nähe des Registrierungsorts 330 angebracht sein. Die Sensoren 340 weisen eine Schnittstelle zur Kommunikation mit dem lokalen Computersystem 350, zum Beispiel eine WLAN Schnittstelle, auf.

Das lokale Computersystem 350 kann auf verschiedene Weisen ausgebildet sein. Es kann beispielsweise einen Server und einen damit über Ethernet verbundenen mindestens einen Arbeitsplatzrechner umfassen. Der Arbeitsplatzrechner kann Benutzerschnittstellen zur Verfügung stellen oder mit solchen verbunden sein. Die Benutzerschnittstellen können beliebige Ein- und Ausgabemitteln aufweisen, wie zum Beispiel einen Bildschirm, ggf. mit Touchscreen, Lautsprecher, eine Tastatur und/oder Knöpfe, usw. Der Server kann ein WLAN bereitstellen und hierzu einen WLAN Zugangspunkt aufweisen oder mit einem solchen verbunden sein. Über das WLAN kann der Server dann Daten von den Sensoren 340 erhalten und Steuerbefehle an die LEDs 322 geben. Gegebenenfalls kann der Server über das WLAN auch Steuerbefehle an die Sensoren 340 ausgeben, beispielsweise um diese ein- und auszuschalten und/oder um sie auszurichten und/oder um sie zu kalibrieren. Der Server kann darüber hinaus eine Schnittstelle zum Internet und damit zum Zentralcomputer 300 bereitstellen. Generell kann der Server bezüglich einer Ausgestaltung der Erfindung darauf beschränkt sein, Informationen zwischen dem Zentralcomputer 300 einerseits und den anderen beschriebenen Komponenten der Lagereinrichtung - d.h. LEDs 322, Sensoren 340, Arbeitsplatzrechner und ggf. Beförderungseinrichtung 360 - auszutauschen. Er kann aber auch selber für einen Teil der erfindungsgemäßen Informationsverarbeitung zuständig sein. Außerhalb der erfindungsgemäßen Prozesse kann er darüber hinaus optional als regulärer Server genutzt werden.

Die optionale Beförderungseinrichtung 360 ist dazu ausgebildet, Objekte eigenständig von dem Registrierungsort 330 zu einem Lagerplatz 321 zu befördern und dort abzulegen sowie Objekte von einem Lagerplatz 321 zu entnehmen und zu dem Registrierungsort 330 zu befördern. Die Beförderungseinrichtung 360 kann dabei beliebig ausgebildet sein. Sie kann sich beispielsweise entlang einem Schienensystem bewegen, oder sich frei im Raum bewegen. In letzterem Fall kann die Bewegung ferngesteuert erfolgen, oder anhand einer integrierten, nur auf Grundlage eines eigegebenen Ziels operierenden Steuerung. Die Beförderungseinrichtung 360 weist hierzu eine Schnittstelle auf, über die sie Befehle zu einem Ziel und zu der Art der jeweils benötigten Aktion (Ein- oder Auslagerung) von dem lokalen Computersystem empfangen kann.

Die dargestellten oder beschriebenen Verbindungen zwischen Komponenten sind als funktionale Verbindungen zu verstehen. Sie können direkt oder indirekt über mehrere andere Komponenten realisiert werden.

Das dargestellte System kann im Rahmen der Erfindung auf vielfältige Weise abgewandelt werden, sowohl durch das Hinzufügen von Komponenten also auch durch das Weglassen von Komponenten, sowie durch das Abwandeln von Komponenten. Hierdurch können sich jeweils weitere oder alternative Vorteile ergeben.

So könnte der Zentralcomputer 300 beispielsweise statt einer Schnittstelle 304 zum Internet auch mehr als eine und/oder andere Schnittstellen aufweisen. Die Datenbank 310 könnte alternativ beispielsweise unmittelbar mit dem Zentralcomputer 300 verbunden oder sogar in diesen integriert sein. Weiter alternativ könnte die Logik für die Datenbank im Zentralcomputer 300 angelegt und nur die Speicher 311 extern angeordnet sein. Wenn der Zentralcomputer 300 nur für eine Lagereinrichtung vorgesehen ist, und vor Ort in der Lagereinrichtung untergebracht ist, so könnte der Zentralcomputer 300 über ein lokales Netzwerk mit anderen Komponenten der Lagereinrichtung kommunizieren und zumindest zum Teil die Funktionen des lokalen Computersystems 350, zum Beispiel die Funktion des Servers, mit übernehmen.

Statt eines einzigen Registrierungsorts 330 können auch mehrere Registrierungsorte vorgesehen werden; zum Beispiel, aber nicht notwendigerweise ein separater Registrierungsort für Ein- und Auslagerungen.

Alternativ oder zusätzlich zu den LEDs 322 könnten in der Lagereinrichtung beispielsweise mindestens ein ausrichtbarer Laserpointer vorgesehen sein. Jeder der Laserpointer ist dann mittels eines Motors so in X, Y und Z-Richtung eines Koordinatensystems ausrichtbar, dass sie jeden der Lagerplätze 321 hervorheben können. Die Laserpointer können für unterschiedliche Arten der Hervorhebung optional unterschiedliche Farben aufweisen, oder sie können optional beispielsweise kontinuierlich oder pulsierend angesteuert werden, um so unterschiedliche Arten der Hervorhebung zu erzielen.

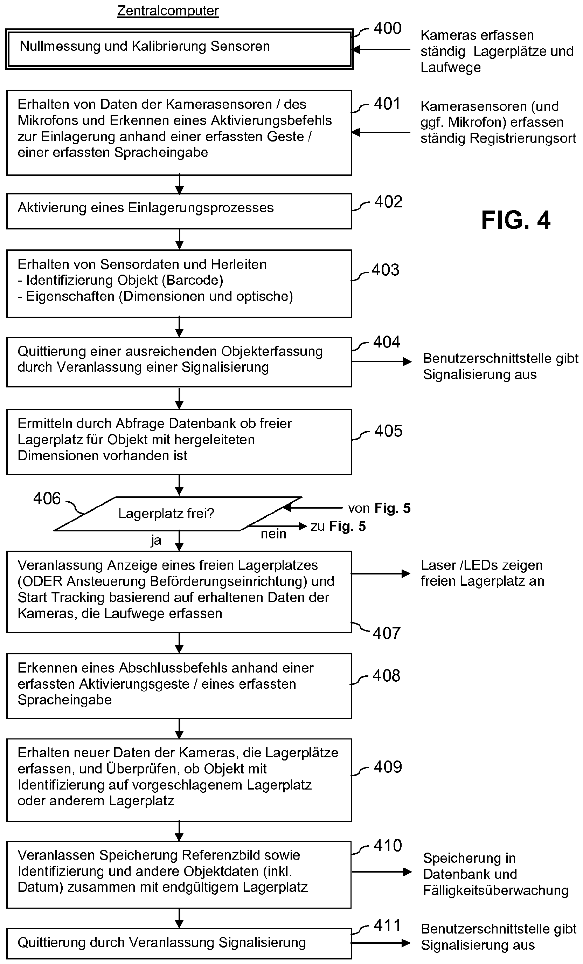

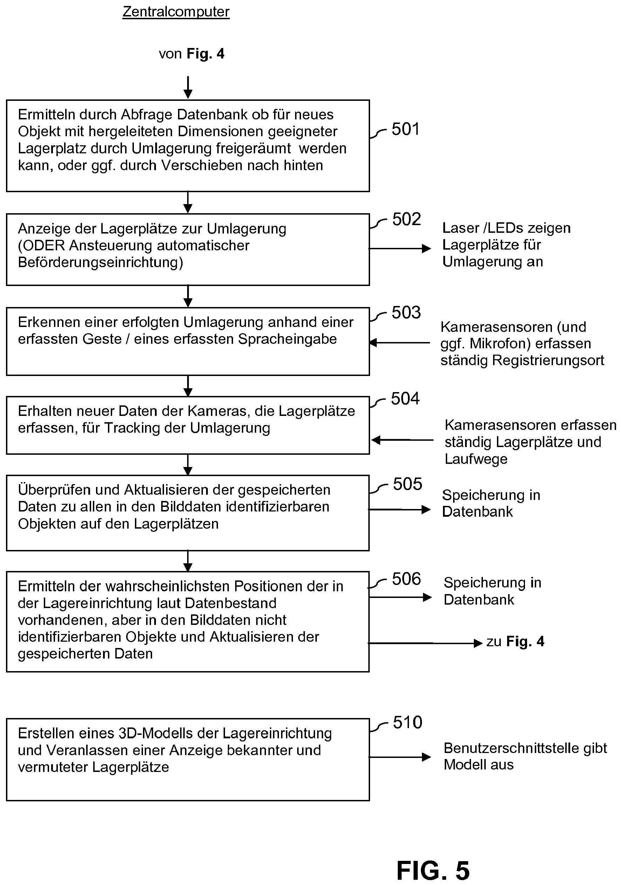

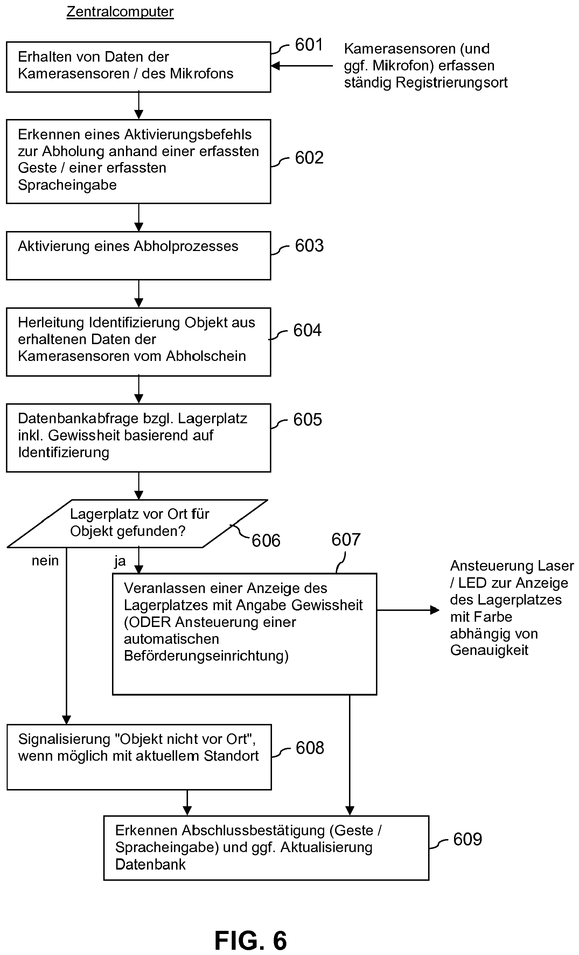

Figuren 4 bis 6 sind Ablaufdiagramme, die ein Ausführungsbeispiel eines erfindungsgemäßen Verfahrens, durchgeführt in dem System aus Figur 3, illustrieren. Figur 4 betrifft dabei im Wesentliche eine Einlagerung von Objekten in der Lagereinrichtung, Figur 5 eine Umlagerung von Objekten in der Lagereinrichtung und Figur 6 eine Entnahme von Objekten aus der Lagereinrichtung. Die dargestellten Aktionen werden von dem Zentralcomputer 300 ausgeführt, wenn der Prozessor 301 entsprechende Programmanweisungen aus dem Programmspeicher 302 ausliest und ausführt und den Zentralcomputer 300 damit zum Ausführen der Aktionen veranlasst. Die Kommunikation des Zentralcomputers 300 mit anderen Komponenten erfolgt über das Internet, und die Kommunikation innerhalb der Lagereinrichtung erfolgt über das WLAN.

Die Einlagerung eines Objekts erfolgt gemäß Figur 4 beispielhaft wie folgt:

Die Kameras mit den Sensoren 340 erfassen ständig die Lagerplätze 321, die Laufwege und den Registrierungsort 330 und liefern die Daten an das lokale Computersystem 350.

Vor der ersten Einlagerung eines Objekts erfolgt eine Nullmessung und eine Kalibrierung der Kamerasensoren 340 vor den leeren Lagerplätzen 321 und Laufwegen. (Aktion 400) Mit der Kalibrierung werden die Sensoren 340 so ausgerichtet, dass jeder Punkt im vorderen Bereich der Lagerplätze und jeder Punkt im Beförderungsbereich der Laufwege von Sensoren 340 erfasst werden kann, und die Parameter der Sensoren 340 werden aufeinander abgestimmt. Die Nullmessung liefert eine Dokumentation der Ausgangssituation in Form eines Referenzbildes. Der Zentralcomputer 300 veranlasst hierzu das lokale Computersystem 350, die zu einem beliebigen Zeitpunkt erfassten Daten der Kameras zu liefern. Der Zentralcomputer 300 bewirkt eine Speicherung der Daten als Referenzbild in der Datenbank 310. Die Struktur der Lagerplätze kann vorab händisch oder mittels digitalen Plänen eingegeben und in der Datenbank 310 gespeichert worden sein. Die Angaben zur Struktur können dabei die Anzahl, den Ort und die Größe der Lagerplätze 321 umfassen, und jedem Lagerplatz 321 kann eine feste Referenznummer zugewiesen worden sein. Die Referenznummer können dabei auch der Identifizierung der an dem jeweiligen Lagerplatz 321 angeordneten LEDs 322 dienen, wobei bei mehreren LEDs 322 pro Lagerplatz 321 jede LED über einen Zusatz eindeutig identifiziert werden kann. Der Zentralcomputer 300 kann das Referenzbild beispielsweise mit der gespeicherten Struktur abgleichen, und somit für jeden Lagerplatz 321 eine Information erhalten, welche Bilddaten zu dem Lagerplatz 321 ohne Belegung zu erwarten sind. Des Weiteren kann zu diesem Zeitpunkt jedem Lagerplatz 321 in der Datenbank 310 der Status "leer" zugewiesen werden. Optional könnte der Zentralcomputer 300 die Daten der Kamerasensoren 340 auch verarbeiten, um die Struktur der Lagerplätze 321 selber zu ermitteln, und diesen dann selber Referenznummern vergeben. Nach der Nullmessung und Kalibrierung wird die Nutzung freigegeben.

Sollen nun Objekte eingelagert werden, so begibt sich ein Mitarbeiter mit dem Objekt zum Registrierungsort 330. Die Kamerasensoren 340 und ggf. das Mikrofon erfassen ständig Daten am Registrierungsort 330 und liefern diese über das lokale Computersystem 350 an den Zentralcomputer 300. Der Mitarbeiter kann nun zur Aktivierung des Einlagerungsprozesses eine hierzu vorgesehene Geste durchführen oder eine hierzu vorgesehene Spracheingabe machen. Die Geste oder die Spracheingabe wird vom Zentralcomputer 300 erkannt (Aktion 401), und der Prozess wird aktiviert (Aktion 402). Es versteht sich, dass zur Reduzierung der zwischen dem lokalen Computersystem 350 und dem Zentralcomputer 300 transferierten Daten die Geste oder der Spracheingabe alternativ durch das lokale Computersystem 350 erkannt werden kann, und dass erst ab diesem Zeitpunkt Sensordaten an den Zentralcomputer 300 übermittelt werden können.

Der Zentralcomputer 300 erhält daraufhin gegebenenfalls erneut Daten der Kameras am Registrierungsort 330 und wertet diese aus. (Aktion 403) Insbesondere bestimmt er eine Identifizierung des Objekts. Die Identifizierung kann beispielsweise durch Erkennung und Bestimmung eines sich auf dem Objekt befindlichen Barcodes erfolgen. Anstelle eines Barcodes kann hierzu auch ein zweidimensionaler Code oder eine Zeichenfolge genutzt werden. Zusätzlich werden Eigenschaften des Objekts ermittelt. Insbesondere werden die Dimensionen des Objekts ermittelt. So können beispielsweise mittels Bildverarbeitung Kanten und/oder Ecken des Objekts ermittelt werden, und der Abstand zwischen zwei Kamerasensoren 340 und der Winkel, in dem die Kanten und/oder Ecken von jedem der Sensoren 340 erfasst werden, können genutzt werden, um die jeweilige Distanz zu den Sensoren 340 zu bestimmen. Aus den Distanzen verschiedener Kanten und/oder Ecken lassen sich dann die Dimensionen des Objekts ermitteln. Es versteht sich, dass die Dimensionen auch auf beliebige andere Weise bestimmt werden können; insbesondere beispielsweise auch mittels der Daten von Sensoren, die für ein Laufzeitverfahren ausgesendete und reflektierte Infrarot-Impulse erfassen. Optional können anhand von Bilddaten weitere Eigenschaften bestimmt werden, beispielsweise optische Eigenschaften, wie die Farbgebung, Muster und/oder Form.

War die Objekterfassung erfolgreich, so quittiert der Zentralcomputer 300 die ausreichende Objekterfassung durch Veranlassung einer Signalisierung durch das lokale Computersystem 350. (Aktion 404) Die Signalisierung wird dann durch eine Benutzerschnittstelle des lokalen Computersystems 350 optisch und/oder akustisch ausgegeben.

Der Zentralcomputer 300 ermittelt daraufhin durch Abfrage der Datenbank 310 ob in der Lagereinrichtung ein freier Lagerplatz 321 für ein Objekt mit den ermittelten Dimensionen vorhanden ist. (Aktion 405)

Ist kein Lagerplatz frei (Aktion 406), so fährt der Zentralcomputer 300 mit Figur 5 fort.

Ist ein Lagerplatz frei (Aktion 406), so veranlasst der Zentralcomputer 300 mittels des lokalen Computersystems 350 eine Anzeige eines freien Lagerplatzes (Aktion 407). Es wird stets der kleinste freie Lagerplatz, in den ein Objekt mit den ermittelten Dimensionen passt, zum Anzeigen ausgewählt. Sind mehrere geeignete Lagerplätze 321 mit gleicher Kapazität frei, so wird beispielsweise stets der Lagerplatz 321 zum Anzeigen ausgewählt, der am nächsten an dem Registrierungsort 330 liegt, um Wege zu minimieren. Die Anzeige kann durch Ansteuerung einer LED 322 an dem ausgewählten Lagerplatz 321 erfolgten. Sind statt LEDs 322 Laserpointer vorgesehen, so veranlasst der Zentralcomputer 300 mittels des lokalen Computersystems 350 eine entsprechende Ausrichtung und Aktivierung eines Laserpointers, um den ausgewählten Lagerplatz 321 anzuzeigen. Bei einer großen Lagereinrichtung, in der der Mitarbeiter die Lagerplätze 321 nicht vollständig überblicken kann, kann beispielsweise zusätzlich am Registrierungsort 330 eine Ansage oder eine Anzeige auf einem Bildschirm erfolgen, welcher Lagerplatz oder welcher Regalabschnitt o.ä. ausgewählt wurde.

Gleichzeitig kann beispielsweise ein Tracking des Objekts von dem Registrierort 330 zu einem Lagerplatz 321 mittels Auswertung der Daten von auf die Laufwege ausgerichteten Kamerasensoren 340 gestartet werden.

Der Mitarbeiter begibt sich daraufhin mit dem Objekt zu dem angezeigten Lagerplatz 321 und legt das Objekt dort ab. Möglicherweise wählt der Mitarbeiter aber auch einen anderen Lagerplatz 321 aus, beispielsweise einen zu großen, aber näheren Lagerplatz.

Danach gibt der Mitarbeiter einen Abschlussbefehl anhand einer Aktivierungsgeste oder einer Spracheingabe. Der Mitarbeiter kann den Abschlussbefehl beispielsweise unmittelbar nach Ablegen des Objekts geben, also direkt vor dem Lagerplatz 321, oder aber nachdem er sich zurück zum Registrierungsort 330 begeben hat. Letzteres kann die Erfassung von Gesten erleichtern und/oder die Anzahl an erforderlichen Mikrofonen reduzieren.

Der Zentralcomputer 300 erkennt den Abschlussbefehl anhand von Daten der Sensoren 340, die über das lokale Computersystem 350 weiterhin erhalten werden. (Aktion 408)

Wenn der Zentralcomputer 300 nach dem Abschlussbefehl neue Daten der Kamerasensoren 340 erhält, die die Lagerplätze 321 erfassen, überprüft er, ob das Objekt auf dem vorgeschlagenen Lagerplatz oder auf einem anderen Lagerplatz erkannt wird. (Aktion 409) Die Erkennung erfolgt anhand einer in den Daten enthaltenen Identifizierung des Objekts, z.B. des Barcodes. Für eine zügige Erkennung fängt der Zentralcomputer 300 bei der Überprüfung damit an, ob er die Identifizierung auf einem Objekt auf dem vorgeschlagenen Lagerplatz erkennt. Erst wenn dies nicht der Fall ist, werden weitere Lagerplätze ausgewertet. Hierzu kann beispielsweise vorranging eine Position des Objekts am Ende eines Trackings des Objekts überprüft werden. Da beim Tracking nicht immer der Barcode sichtbar ist, können bei der Auswertung der Daten für das Tracking auch andere Objekteigenschaften, wie Dimensionen und Farbgebung berücksichtig werden. Dadurch kann die Position eines Objektes in einem Lagerfach auch dann bekannt sein oder als wahrscheinlich angenommen werden, wenn der Barcode im Lagerfach nicht nach vorne ausgerichtet ist. Außerdem kann so erfasst werden, wenn ein Objekt aus irgendeinem Grund nicht auf einem Lagerplatz abgelegt wird, sondern beispielsweise wegen eines dazwischen kommenden Ereignisses irgendwo abgelegt und dann vergessen wird.

Der Zentralcomputer 300 veranlasst dann eine Speicherung eines neuen Referenzbildes in der Datenbank 310, das der letzten Aufnahme der Lagerplätze 321 durch die Kameras entspricht. Zusätzlich veranlasst der Zentralcomputer 300 eine Speicherung der Identifizierung des Objekts und dieser zugeordnet sämtlicher ermittelter Objektdaten (wie Dimensionen und Farbe) sowie der Referenznummer des erkannten endgültigen Lagerplatzes 321 des Objekts in einem eigenen Datenbankeintrag in der Datenbank 310. Zusätzlich kann auch ein Objektstatus in dem Datenbankeintrag gespeichert werden, wie beispielsweise der Zeitpunkt der Einlagerung. (Aktion 410) Die Daten können unter Nutzung verschiedener Strukturen gespeichert werden. So kann beispielsweise eine eigene Struktur für jede Lagereinrichtung vorgesehen werden, so dass die Objekte automatisch einer bestimmten Lagereinrichtung zugeordnet sind. Ist ein Status für die Lagerplätze 321 vorgesehen, so kann der Status von "leer" oder "teilweise belegt" auf "belegt" oder - je nach Dimension des Objekts im Verhältnis zur Größe der Lagerplatzes 321 - auf "teilweise belegt" geändert werden. Ein gespeicherter Zeitpunkt der Einlagerung kann beispielsweise als Grundlage für eine regelmäßige (z.B. tägliche) Überprüfung genutzt werden, ob eine Entnahme des Objekts überfällig ist (z.B. nach Verstreichen einer 7-tägigen Einlagerung). In dem Fall kann beispielsweise ein Mitarbeiter benachrichtigt werden, der das Objekt entnimmt und ausschleust (z.B. im Falle eines Pakets an den Absender zurückschickt).

Ist die Speicherung abgeschlossen, so quittiert der Zentralcomputer 300 dies durch Veranlassung einer Signalisierung. (Aktion 411) Die Signalisierung erfolgt dabei über das lokale Computersystem 350, beispielsweise über einen Lautsprecher und/oder einen Bildschirm des lokalen Computersystems 350.

Wird in Aktion 406 festgestellt, dass kein passender Lagerplatz für ein bestimmtes Objekt frei ist, so erfolgt nach Möglichkeit eine Umlagerung, wie beispielhaft in Figur 5 dargestellt:

Der Zentralcomputer 300 ermittelt durch Abfrage der Datenbank 310, ob für das neue Objekt mit den hergeleiteten Dimensionen ein geeigneter Lagerplatz 321 durch Umlagerung freigeräumt werden kann. (Aktion 501) Hierzu wird zum Beispiel nach eingelagerten Objekten gesucht, die zuvor mangels Alternative (oder auf Initiative des Mitarbeiters beispielsweise zur Reduzierung des Weges) auf einem zu großen Lagerplatz 321 abgelegt wurden. Ist in der Zwischenzeit ein kleinerer aber noch passender Lagerplatz 321 frei geworden, so ist eine Umlagerung ohne weiteres möglich. Gegebenenfalls muss die Umlagerung in zwei oder mehr Schritten erfolgen, bei der zunächst ein kleines Objekt von einem mittleren Lagerplatz 321 auf einen kleinen Lagerplatz 321 umgelagert wird, und dann ein mittelgroßes Objekt von einem großen Lagerplatz 321 auf einen mittelgroßen Lagerplatz 321 umgelagert wird, um schließlich für ein neu eingeliefertes Objekt einen gegebenenfalls benötigten großen Lagerplatz 321 freizuräumen. Sofern nötig kann dabei auch vorgesehen werden, dass ein Objekt auf seinem Lagerplatz 321 oder auf einem neuen Lagerplatz 321 nach hinten geschoben wird, um weiter vorne einen Teillagerplatz freizumachen.

Konnte eine geeignete Umlagerungsmöglichkeit ermittelt werden, so veranlasst der Zentralcomputer 300 eine Anzeige der von der Umlagerung betroffenen Lagerplätze. (Aktion 502) Die Anzeige kann auf verschiedene Weisen erfolgen. Beispielsweise könnte ein Lagerplatz mit einem zu entnehmenden Objekte mit aktivierter roter LED 322 gekennzeichnet werden, und ein Lagerplatz, auf den ein Objekt umgelagert werden soll, mit aktivierter grüner LED 322, o.ä.

Die erfolgte Umlagerung kann von dem Zentralcomputer 300 beispielsweise anhand einer Geste und/oder einer Spracheingabe des Mitarbeiters, die sich aus den weiterhin von dem lokalen Computersystem 350 weitergeleiteten Daten der Sensoren 340 ergeben, erkannt werden. (Aktion 503)

Wenn der Zentralcomputer 300 danach neue Daten der Kamerasensoren 340 erhält, die die Lagerplätze 321 und Laufwege erfassen, so werden diese für ein Tracking der Umlagerung bereitgestellt. (Aktion 504)

Der Zentralcomputer 300 überprüft die gespeicherten Daten zu allen (z.B. anhand eines Barcodes) identifizierbaren Objekten auf den Lagerplätzen 321. Ergibt sich hierbei eine neue Position eines identifizierten Objekts, so wird eine Aktualisierung in der Datenbank 310 veranlasst. (Aktion 505) Wurden Objekte erkannt, ohne dass diese anhand eines Barcodes eindeutig identifiziert werden konnten, so können auch gespeicherte Objekteigenschaften, wie Dimensionen und Farbe, hinzugezogen werden, um festzustellen, um welche Objekte es sich (wahrscheinlich) handelt.

Der Zentralcomputer 300 ermittelt ferner, welche Objekte sich laut Datenbank 310 in der Lagereinrichtung befinden, die anhand der aktuellen Daten der Sensoren 340 nicht erkennbar sind. Eine solche Konstellation kann verschiedene Gründe haben. So kann der Mitarbeiter ein Objekt auf dem Lagerplatz 321 beispielsweise nach hinten verschoben haben, um ein anderes Objekt davor zu platzieren oder davor platzieren zu können. In dem Fall ist der Barcode zum Identifizieren des Objektes in den Bilddaten der Sensoren 340 nicht unbedingt erkennbar.

Für diese Objekte ermittelt der Zentralcomputer 300 den wahrscheinlichsten Lagerplatz. (Aktion 506) Hierzu können Informationen zu dem zuletzt gespeicherte Lagerplatz 321 herangezogen werden; und/oder Informationen zu einem Vorschlag in Aktion 502 einem bereits belegten Lagerplatz 321 ein weiteres Objekt hinzuzufügen; und/oder Informationen aus dem letzten Tracking des Objekts.

Generell kann der Zentralcomputer 300 aus historischen Objekteigenschaften, -positionen und -bewegungen lernen, um wahrscheinliche Objektpositionen außerhalb des Erfassungsbereichs der Sensoren 340 zu errechnen.

Für die Objekte, für die lediglich eine wahrscheinlichste Position bestimmt wurde, wird eine Speicherung der Position in der Datenbank zusammen mit einer Angabe veranlasst, dass es sich um eine angenommene Position handelt.

Sobald die Umlagerung erfolgt ist und die aktualisierten Daten gespeichert sind, kann der Zentralcomputer 300 wieder mit Aktion 406 aus Figur 4 fortfahren.

Es versteht sich, dass Aktion 506 zusätzlich auch in dem Ablauf aus Figur 4, z.B. im Anschluss an Aktion 409, durchgeführt werden kann. Abgesehen davon können die Überprüfungen gemäß den Aktionen 504-506 zu beliebigen Zeitpunkten erfolgen, um die Güte der Daten in der Datenbank zu überprüfen. Sie können beispielsweise prinzipiell einmal täglich außerhalb der Arbeitszeiten der Mitarbeiter erfolgen.

In dem Rahmen kann beispielsweise auch erfasst werden, wenn sich ein anhand der Bilddaten der Sensoren 340 identifizierbares Objekt in der Lagereinrichtung befindet, das nicht vorab registriert wurde und somit in der Datenbank 310 nicht erfasst ist. Dies kann beispielsweise der Fall sein, wenn ein Mitarbeiter vergessen hat, das Objekt zunächst am Registrierungsort 330 erfassen zu lassen, bevor er es auf einem beliebigen Lagerplatz abgelegt hat.

Die in der Datenbank 310 vorhandenen Daten können von dem Zentralcomputer 300 verwendet werden, um ein 3D-Modell der Lagereinrichtung zu erstellen. Das Modell kann dann - veranlasst durch den Zentralcomputer 300 - mit Angabe bekannter und vermuteter Lagerplätze 321 beispielsweise auf einem Bildschirm des lokalen Computersystems 350 angezeigt werden. (Aktion 510) Eine solche Anzeige ermöglicht es Mitarbeitern, wahrscheinliche Positionen zu verifizieren und ggf. Korrekturen der tatsächlichen Lagerplätze 321 durchzuführen. Über Eingabemittel des lokalen Computersystems 350 können die Mitarbeiter auch in die Lage versetzt werden, dem Zentralcomputer 300 erforderliche Korrekturen mitzuteilen, damit dieser die Datenbank 310 entsprechend aktualisiert. So kann nach einer Verifizierung zum Beispiel ein Objekt mit einer sicheren Positionsangabe versehen werden, auch wenn es sich anhand der Daten der Sensoren 340 zurzeit nicht identifizieren lässt. Die Aktion 510 kann dabei zu einem beliebigen Zeitpunkt durchgeführt werden, beispielsweise jeweils auf Aufforderung eines Mitarbeiters über eine Benutzerschnittstelle des lokalen Computersystems 350 hin; oder aber automatisch zu bekannten Leerlaufzeiten. Durch einen Vergleich von aktuellen Daten mit dem zuletzt gespeicherten Referenzbild kann der Zentralcomputer 300 auch schnell erfassen, auf welchen Lagerplätzen 321 Änderungen zu berücksichtigen sein können.

Die Entnahme eines Objekts aus der Lagereinrichtung erfolgt gemäß Figur 6 beispielhaft wie folgt:

Ein Mitarbeiter will ein Objekt beispielsweise aus der Lagereinrichtung entnehmen, wenn ein Kunde einen Abholschein für ein Objekt, wie ein Paket, übergibt. Der Mitarbeiter begibt sich dann mit dem Abholschein zu dem Registrierungsort 330 und damit in den Bereich einiger der Sensoren 340.

Die Sensoren 340 erfassen weiterhin ständig den Registrierungsort 330, und der Zentralcomputer 300 erhält die Daten der Sensoren 340 weiterhin über das lokale Computersystem 350. (Aktion 601)

Der Mitarbeiter führt eine Geste aus, die zur Aktivierung des Abholprozesses vorgesehen ist, oder er macht eine entsprechende Spracheingabe. Erkennt der Zentralcomputer 300 anhand der erhaltenen Daten der Sensoren 340 die Geste oder die Spracheingabe zur Abholung eines Objekts (Aktion 602), so aktiviert er den Abholprozess (Aktion 603). Für eine Variante ist es wiederum möglich, dass die Geste oder die Spracheingabe alternativ durch das lokale Computersystem 350 erkannt wird, und dass erst ab diesem Zeitpunkt Sensordaten an den Zentralcomputer 300 übermittelt werden.

Der Zentralcomputer 300 sucht daraufhin in den Daten der Kameras 340, die den Registrierungsort 330 erfassen, nach einem Barcode auf einem Abholschein, um daraus die Identifizierung eines abzuholenden Objekts herzuleiten. (Aktion 604)

Der Zentralcomputer 300 führt eine Datenbankabfrage bezüglich der Position des Objekts in der Lagereinrichtung basierend auf der Identifizierung durch. (Aktion 605) Eine Position ist dabei jeweils in Form der Referenznummer eines Lagerplatzes 321 gespeichert.

Wird eine gespeicherte Position des Objekts in der Lagereinrichtung in der Datenbank 310 gefunden (Aktion 606), so umfasst diese neben der Referenznummer des Lagerplatzes auch eine gespeicherte Angabe zur Gewissheit der Position.

Der Zentralcomputer 300 veranlasst eine Anzeige des der Referenznummer entsprechenden Lagerplatzes 322 mit Angabe der Gewissheit mittels des lokalen Computersystems 350. (Aktion 607) Das lokale Computersystem 350 steuert hierzu in Abhängigkeit von der Gewissheit der Position eine dem Lagerplatz 321 zugeordneten LED 322 an. Ist die Position eine exakt bekannte Position, so kann zum Beispiel eine grüne LED am Lagerplatz 321 zum Leuchten gebracht werden. Ist die Position dagegen eine rechnerisch ermittelte, wahrscheinliche Position so kann zum Beispiel eine gelbe LED am Lagerplatz 321 zum Leuchten gebracht werden. Werden zur Anzeige eines Lagerplatzes 321 statt LEDs Laser genutzt, so steuert das lokale Computersystem 350 die Bewegungseinrichtung eines Lasers mit einer der Gewissheit zugeordneten Farbe an, um diesen auf den gewünschten Lagerplatz 321 auszurichten, und aktiviert den Laser.

Der Mitarbeiter findet das auf dem Abholschein identifizierte Objekt aufgrund der Hervorhebung des Lagerplatzes 321 zügig. Er entnimmt das Objekt und führt am Registrierungsort 330 eine vorgesehene Geste als Abschlussbestätigung aus. Statt der Geste kann wiederum eine Spracheingabe erfolgen.

Die Sensoren 340 am Registrierungsort 330 erfassen die Abschlussbestätigung und übermitteln entsprechende Daten an das lokale Computersystem 350, das die Daten an den Zentralcomputer 300 weiterleitet. Der Zentralcomputer 300 erkennt die Abschlussbestätigung in den erhaltenen Daten, aktualisiert die Datenbank 310 und beendet den Abholprozess. (Aktion 609) Die Aktualisierung der Datenbank 310 kann beispielsweise darin bestehen, dass ein Positionseintrag gelöscht wird und ein Status für das Objekt auf "abgeholt" gesetzt wird. In einer Variation kann vorgesehen sein, dass neben der Geste bzw. der Spracheingabe auch die Identifizierung des Objekts am Registrierungsort 330 erneut erkannt werden muss, bevor die Datenbank 310 aktualisiert wird, um sicherzugehen, dass das richtige Objekt entnommen wurde. Wird hier eine Diskrepanz zwischen der Identifizierung auf dem Abholschein und der Identifizierung auf dem Objekt erkannt, kann eine akustische oder optische Warnung mittels einer Benutzerschnittstelle des lokalen Computersystems 350 veranlasst werden.

Wird in Aktion 605 dagegen keine gespeicherte Position des Objekts in der Lagereinrichtung in der Datenbank 310 gefunden (Aktion 606), so signalisiert der Zentralcomputer 300 dem lokalen Computersystem 350, dass sich das Objekt nicht vor Ort befindet (Aktion 608). Hierzu kann das lokale Computersystem einfach über eine Benutzerschnittstelle einen bestimmten Ton oder ein bestimmtes optisches Signal ausgeben. Alternativ kann eine entsprechende Nachricht akustisch über einen Lautsprecher oder visuell auf einem Bildschirm ausgegeben werden.

In einigen Fällen mag der Zentralcomputer 300 in Aktion 605 feststellen, dass das gesuchte Objekt sich zwar nicht in der Lagereinrichtung befindet, in der sich der Kunde befindet, aber dass das gesuchte Objekt mit Zuordnung zu einer anderen Lagereinrichtung gefunden wurde, oder aber dass für das gesuchte Objekt der Status abgeholt hinterlegt ist. In beiden Fällen könnte der Zentralcomputer 300 über Lautsprecher oder einen Bildschirm des lokalen Computersystems 350 die Ausgabe einer entsprechenden Information veranlassen.

Auch in diesem Fall kann vorgesehen werden, dass der Mitarbeiter den Abholprozess durch eine vorgesehene Geste oder eine vorgesehene Spracheingabe am Registrierungsort 330 abschließt. Die Sensoren 340 am Registrierungsort 330 erfassen die Abschlussbestätigung und übermitteln entsprechende Daten an das lokale Computersystem 350, das die Daten an den Zentralcomputer 300 weiterleitet. Der Zentralcomputer 300 erkennt die Abschlussbestätigung in den erhaltenen Daten und beendet den Abholprozess. (Aktion 609) In diesem Fall entfällt eine Aktualisierung der Datenbank 310.

Es versteht sich, dass für die Aktionen 401, 408, 503, 602 und 609 jeweils unterschiedliche Gesten oder Spracheingaben des Mitarbeiters vorgesehen sein können. Alternativ kann der Zentralcomputer 300 aber auch aus dem Kontext erkennen, welcher Prozess jeweils gestartet oder beendet werden soll.

Bestimmte Ausführungsformen der Erfindung sehen also vor, dass fortlaufend multiple Objektpositionen in Echtzeit ermittelt werden, wozu mehrere Sensoren abschattungsfrei den Lagerbereich und gegebenenfalls mindestens einen anderen Arbeitsbereich erfassen. Die ermittelten Objektdaten, wie Identifizierung, Position, Dimensionen und optische Merkmale, werden in einer Datenbank eingetragen und die Position sowie gegebenenfalls ein Objektstatus werden jeweils bei Bedarf aktualisiert. Die Position eines beliebigen Objekts kann damit stets anhand einer Identifizierung ausgelesen und angezeigt werden. Historische Daten können dabei genutzt werden, um optimale Lagerplätze für ähnliche Objekte vorzuschlagen und/oder um wahrscheinliche Positionen eventuell bewegter, verdeckter Objekte möglichst präzise zu ermitteln. Die Analyse historischer Ein- und Auslagerungsvorgänge ermöglicht dabei auch eine kontinuierliche Optimierung des Systems. Eine Gesamtübersicht, erstellt basierend auf den Datenbankeinträgen, ermöglicht den Hinweis auf mögliche Probleme und gegebenenfalls eine Korrektur durch einen Nutzer.

Die Blöcke 201-206 in Figur 2 können auch als Repräsentation von entsprechenden Programmanweisungen in Programmspeicher 102 gesehen werden. Die Blöcke 401-411, 501-510 und 601-609 können auch als Repräsentation von entsprechenden Programmanweisungen in Programmspeicher 302 gesehen werden.

Das bespielhaft dargestellte Verfahren kann im Rahmen der Erfindung auf vielfältige Weise abgewandelt werden, sowohl durch das Hinzufügen von Aktionen, durch das Weglassen von Aktionen und durch das Abwandeln von Aktionen. Hierdurch können sich jeweils weitere Vorteile ergeben. Auch die Abfolge der geschilderten Aktionen in dem Ablaufdiagramm in Figur 2 ist nicht zwingend; alternative Abfolgen sind denkbar. Schließlich können die Aktionen auf verschiedene Art und Weise implementiert werden und von verschiedenen Vorrichtungen durchgeführt werden.

Sofern eine automatische Beförderungseinrichtung 360 genutzt wird, kann in Aktion 407 beispielsweise statt einer Anzeige des gewählten Lagerplatzes 321 eine entsprechende Vorgabe an oder Ansteuerung der Beförderungseinrichtung 360 erfolgen. Sobald der Mitarbeiter das Objekt der Beförderungseinrichtung 360 übergeben hat, kann die Beförderungseinrichtung 360 das Objekt dann zu dem gewählten Lagerplatz befördern. Entsprechend kann die Umlagerung in Aktion 502 und die Entnahme in Aktion 607 über eine Ansteuerung einer automatischen Beförderungseinrichtung 360 erfolgen.

Es versteht sich, dass die beschriebenen Ausführungsformen generell lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren umfassend:
- Empfangen von Daten einer Mehrzahl von Sensoren (340), die in einer Lagereinrichtung derart angeordnet sind, dass sie zumindest Lagerplätze (321) der Lagereinrichtung und mindestens einen Weg in der Lagereinrichtung erfassen können;
- Herleiten zumindest einer Identifizierung und einer Position mindestens eines Objekts in der Lagereinrichtung aus den empfangenen Daten;
- Veranlassen einer Speicherung der Position des mindestens einen Objekts mit Zuordnung zu seiner Identifizierung, sofern für das mindestens eine Objekt noch keine Position gespeichert ist;
- sofern für das mindestens eine Objekt bereits eine Position gespeichert ist, Überprüfen der für das mindestens eine Objekt gespeicherten Position anhand der hergeleiteten Position und Veranlassen einer Speicherung der hergeleiteten Position im Fall einer Änderung; und
- bei Erhalt einer Anfrage zur Position eines Objekts in der Lagereinrichtung, wobei die Anfrage Daten enthält, die ein Herleiten einer Identifizierung des Objekts ermöglichen, Auslesen einer mit Zuordnung zu der Identifizierung gespeicherten Position des Objekts und Bereitstellen einer Information zu der Position des Objekts.

2. Verfahren gemäß Anspruch 1, wobei das Herleiten einer Position des mindestens einen Objekts in der Lagereinrichtung aus den empfangenen Daten ein Verfolgen eines Wegs mindestens eines Objekts in der Lagereinrichtung anhand von empfangenen Daten von mindestens einem der Mehrzahl von Sensoren (340), der mindestens einen Weg in der Lagereinrichtung erfasst, umfasst.

3. Verfahren gemäß Anspruch 1 oder 2, ferner umfassend:
- Ermitteln sämtlicher Identifizierungen von Objekten in der Lagereinrichtung, die aus Daten hergeleitet werden können, die von der Mehrzahl von Sensoren (340) zu einem bestimmten Zeitpunkt erhaltenen wurden, und
- Bestimmen einer wahrscheinlichen Position jedes Objekts, das laut gespeicherter Daten in der Lagereinrichtung vorhanden ist, und zu dem keine Identifizierung ermittelt werden konnte.

4. Verfahren gemäß einem der Ansprüche 1 bis 3, wobei das Bereitstellen einer Information zu der Position des Objekts bewirkt, dass ein Lagerplatz (321), der der Position des Objekts entspricht, in der Lagereinrichtung optisch hervorgehoben wird, wobei den gespeicherten Positionen eine Angabe zur Gewissheit der Position zugeordnet ist, und wobei ein Lagerplatz (321) in Abhängigkeit von der Angabe zur Gewissheit der Position optisch unterschiedlich hervorgehoben wird.

5. Verfahren gemäß einem der Ansprüche 1 bis 4, wobei zumindest ein Teil der Mehrzahl der Sensoren (340) einen Registrierungsort (330) erfasst, das Verfahren umfassend:
- Herleiten zumindest einer Identifizierung und einer Größe eines Objekts aus empfangenen Daten des Teils der Mehrzahl der Sensoren (340), die den Registrierungsort (330) erfasst;
- Ermitteln eines Lagerplatzes (321) mit ausreichender Kapazität zur Lagerung des erfassten Objekts aus gespeicherten Daten und der hergeleiteten Größe des Objekts; und
- Bereitstellen eine Information zu dem Lagerplatz (321) mit ausreichender Kapazität.

6. Verfahren gemäß Anspruch 5, wobei das Bereitstellen einer Information zu dem Lagerplatz (321) mit ausreichender Kapazität bewirkt, dass der Lagerplatz (321) in der Lagereinrichtung optisch hervorgehoben wird.

7. Verfahren gemäß einem der Ansprüche 5 bis 6, ferner umfassend in dem Fall, dass feststellt wird, dass kein Lagerplatz (321) mit ausreichender Kapazität zur Lagerung des erfassten Objekts zur Verfügung steht,
- Ermitteln einer Möglichkeit einer Umlagerung von Objekten anhand von gespeicherten Daten, um einen Lagerplatz (321) mit ausreichender Kapazität zur Lagerung des erfassten Objekts zu schaffen, und
- Ausgabe einer Information bezüglich einer möglichen Umlagerung.

8. Verfahren gemäß einem der Ansprüche 1 bis 7, wobei vor dem ersten Herleiten einer Position eines Objekts in der Lagereinrichtung aus empfangenen Daten
- eine Kalibrierung der Mehrzahl von Sensoren (340) anhand von erhaltenen Daten der Mehrzahl von Sensoren (340) erfolgt, während sich kein Objekt in der Lagereinrichtung befindet, und/oder
- eine Erstellung eines Referenzbildes anhand von erhaltenen Daten der Mehrzahl von Sensoren (340) erfolgt, während sich kein Objekt in der Lagereinrichtung befindet.

9. Verfahren gemäß einem der Ansprüche 1 bis 8, wobei die Lagereinrichtung eine automatisierte Lagereinrichtung ist, in der mindestens eine Beförderungseinrichtung (360) dazu eingerichtet ist, Objekte auf Lagerplätzen (321) abzulegen und Objekte von Lagerplätzen (321) abzuholen.

10. Verfahren gemäß einem der Ansprüche 1 bis 9, wobei die Lagereinrichtung zumindest teilweise von Bedienpersonal zum Ablegen von Objekten auf Lagerplätzen (321) und zum Abholen von Objekten von Lagerplätzen (321) genutzt wird.

11. Verfahren gemäß einem der Ansprüche 1 bis 10, wobei die Güte der gespeicherten Daten wiederholt anhand jeweils neu erhaltener Daten der Mehrzahl der Sensoren (340) geprüft wird.

12. Verfahren gemäß einem der Ansprüche 1 bis 11, ferner umfassend:
- Überwachen einer mit Zuordnung zu der Identifizierung des mindestens einen Objekts gespeicherten Zeitangabe; und
- Veranlassen einer Benachrichtigung, wenn die gespeicherte Zeitangabe anzeigt, dass eine vorgegebene Aktion fällig ist.

13. Verfahren gemäß einem der Ansprüche 1 bis 12, ferner umfassend:
- Auswerten von erhalten Daten aus einer Mehrzahl von vernetzten Lagereinrichtung mittels "Deep Learning" und
- Bereitstellen der gewonnenen Informationen für die einzelnen Lagereinrichtungen zur Verbesserung der Güte von hergeleiteten Objektpositionen.

14. Vorrichtung (300) umfassend Mittel (301-304) zum Veranlassen der Vorrichtung (300) oder eines Systems, das Verfahren nach einem der Ansprüche 1 bis 13 auszuführen.

15. Vorrichtung (300) nach Anspruch 14, wobei die Mittel (301-304) folgendes umfassen:
- mindestens einen Speicher (302) mit Programmanweisungen und
- mindestens einen Prozessor (301) eingerichtet zum Ausführen von Programmanweisungen aus dem mindestens einen Speicher (302).

16. System umfassend eine Vorrichtung (300) gemäß einem der Ansprüche 14 bis 15 und
- die Mehrzahl von Sensoren (340), und/oder
- eine Beförderungseinrichtung zum Befördern von Objekten, und/oder
- mindestens einen Datenspeicher (311).

17. Computerprogramm mit Programmanweisungen, die dazu eingerichtet sind, eine Vorrichtung (300) oder ein System zu veranlassen, das Verfahren nach einem der Ansprüche 1 bis 13 durchzuführen, wenn sie von mindestens einem Prozessor (301) ausgeführt werden.
